(19) **Europäisches Patentamt**

**European Patent Office**

**Office européen des brevets**

(11) **EP 1 531 372 B1**

(12) **FASCICULE DE BREVET EUROPEEN**

(45) Date de publication et mention
de la délivrance du brevet:
**13.12.2006 Bulletin 2006/50**

(51) Int Cl.:
**G05B 5/01** (2006.01)  **F16F 7/10** (2006.01)

(21) Numéro de dépôt: **04024021.0**

(22) Date de dépôt: **08.10.2004**

(54) **Méthode pour accorder un absorbeur de vibrations**

Verfahren zum Abstimmen eines Schwingungsdämpfers

Method to tune a vibration damping device

(84) Etats contractants désignés:
**CH FR GB LI**

(30) Priorité: **17.11.2003 FR 0313443**

(43) Date de publication de la demande:
**18.05.2005 Bulletin 2005/20**

(73) Titulaire: **EUROCOPTER**
**13725 Marignane Cédex (FR)**

(72) Inventeurs:
• **Aubourg, Pierre-Antoine**
**13006 Marseille (FR)**
• **Naccarato, Gianni**
**13980 Alleins (FR)**

(74) Mandataire: **Renaud-Goud, Thierry**
**GPI & Associes**
**EuroParc de Pichaury**
**1330, rue Guillibert de la Lauzière, Bât D1**
**13856 Aix-en-Provence Cédex 3 (FR)**

(56) Documents cités:
**FR-A- 2 739 670      US-A- 5 620 068**
**US-A- 6 101 453      US-B1- 6 427 815**

**Description**

La présente invention concerne une méthode pour accorder un absorbeur de vibrations. Elle s'applique de manière particulièrement avantageuse dans le domaine des aéronefs à voilure tournante, notamment celui des hélicoptères.

On sait que les hélicoptères, de par leur principe même de fonctionnement, sont soumis à de fortes vibrations.

Les différentes vibrations existantes, et surtout celles ressenties dans la cabine, présentent de nombreux inconvénients, notamment pour le confort de l'équipage et des passagers, ainsi que pour la fatigue des pièces et des équipements agencés dans cette cabine.

On sait que l'une des causes principales de ces vibrations est l'effort engendré sur le rotor principal de sustentation et d'avance, par la rotation de ses pales.

En particulier, on sait que le fuselage d'un hélicoptère est soumis à des efforts et des moments (engendrés par le rotor principal), dont la fréquence de référence est égale au produit du nombre de pales de ce rotor par la fréquence de rotation de celui-ci. La réponse du fuselage est très sensible à l'écart entre les fréquences propres de l'hélicoptère et ce produit.

Les vibrations ainsi engendrées sont principalement dues à l'excitation par l'écoulement aérodynamique précité des modes propres de la structure de l'hélicoptère, et notamment du premier mode de flexion latérale de la queue de l'hélicoptère. Les vibrations dues à l'excitation de ce premier mode de flexion latérale présentent généralement une fréquence de quelques Hertz et sont extrêmement gênantes.

Il est ainsi connu de prévoir un absorbeur de vibrations passif qui est réalisé généralement sous la forme d'un résonateur. Un tel absorbeur est disposé aux endroits où l'on désire réduire les vibrations et il agit par résonance à une fréquence prédéterminée de manière à réduire les vibrations présentant cette fréquence.

Cet absorbeur de vibrations se présente comme un bloc d'amortissement fixé sur un support tel qu'une lame élastique. Une extrémité de ce support est encastrée dans un orifice ménagé à un emplacement approprié de la structure de l'hélicoptère, dans la cabine par exemple.

Un tel absorbeur peut se régler en jouant sur la masse du bloc d'amortissement, par exemple au moyen de rondelles qui sont ajoutées ou retirées d'une ou plusieurs vis solidaires de ce bloc. Il peut également se régler en faisant varier la distance qui sépare le bloc de l'encastrement, par exemple en faisant coulisser ce bloc le long d'une rainure ménagée dans le support.

Le réglage de l'absorbeur peut être effectué en positionnant l'hélicoptère sur un banc vibrant sollicité à la fréquence de référence. Un premier capteur mesure les vibrations, autrement dit l'accélération, au niveau de l'encastrement et un deuxième capteur mesure l'accélération au niveau du bloc d'amortissement.

On mesure le déphasage entre ces deux accélérations, déphasage qui doit être égal à 90° lorsque l'absorbeur est accordé. Si tel n'est pas le cas, on procède par approximations successives en modifiant le ou les réglages de l'absorbeur pour approcher le plus possible cette valeur souhaitée de 90°.

Il faut donc procéder à un nombre conséquent de tests sur le banc vibrant avant d'obtenir un réglage satisfaisant, ce nombre étant d'autant plus important que la précision requise sur le déphasage est élevée.

On connaît par ailleurs les documents FR 2 739 670 et US 5814963 qui enseignent un perfectionnement à l'absorbeur de vibrations visé ci-dessus. Le bloc d'amortissement est ici composé d'une masse principale fixée sur une lame élastique encastrée et d'une masse auxiliaire dont la position relativement au support est déterminée par un actionneur mécanique tel qu'un moteur pas à pas. Cet actionneur est commandé par un calculateur qui réalise l'asservissement de la position de la masse auxiliaire sur le déphasage des deux accélérations.

Un tel asservissement est relativement coûteux car il nécessite des organes spécifiques. Il peut par ailleurs présenter des instabilités lorsque la pente de variation du déphasage en fonction de la fréquence est très élevée. Ces instabilités peuvent conduire à amplifier des vibrations à la fréquence de référence au lieu de les réduire.

La présente invention a ainsi pour objet de réduire les vibrations de manière passive avec un maximum d'efficacité.

Selon l'invention, une méthode selon la revendication 1 est proposée pour accorder un absorbeur de vibrations sur une fréquence de référence.

Avantageusement, la définition de cette valeur de consigne au moyen de la fréquence d'accord fo est effectuée au moyen d'un modèle à un degré de liberté.

La présente invention apparaîtra maintenant avec plus de détails dans le cadre de la description qui suit d'exemples de réalisation donnés à titre illustratif en se référant aux figures annexées qui représentent :

- la figure 1, un schéma d'un absorbeur de vibrations, et

- la figure 2, un synoptique d'une méthode de réglage d'un tel absorbeur.

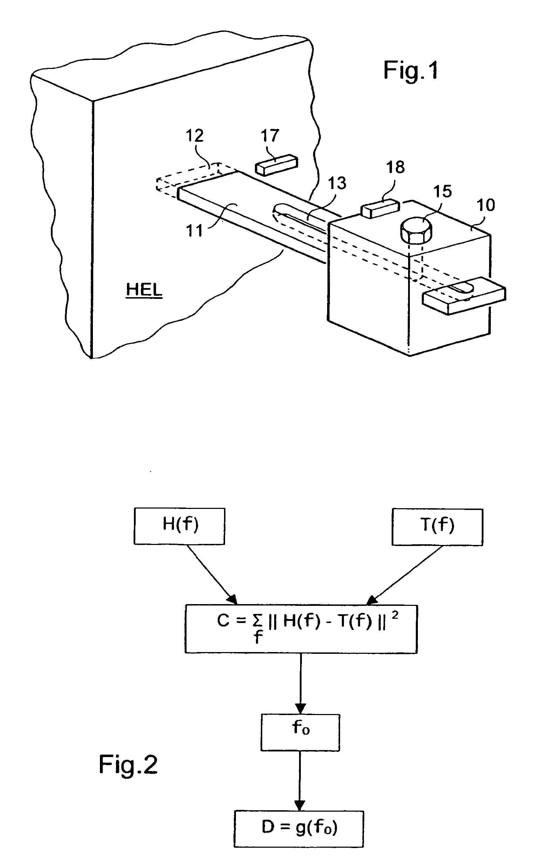

En référence à la figure 1, l'absorbeur de vibrations comprend un bloc d'amortissement 10 qui présente une fente pour coulisser sur un support tel qu'une lame élastique 11. Cette lame est encastrée dans un orifice 12 à un quelconque emplacement de la structure HEL de l'hélicoptère. Elle est pourvue d'une rainure centrale 13 qui coopère avec un boulon 15 de fixation du bloc d'amortissement à la lame.

Pour régler l'absorbeur, on desserre le boulon 15, on déplace le bloc 10 le long de la lame jusqu'à la position requise et on verrouille le bloc dans cette position en resserrant le boulon 15.

On agence d'autre part un premier capteur 17 de vibrations tel qu'un accéléromètre au niveau de l'encastrement et un deuxième accéléromètre 18 sur le bloc d'amortissement 10.

Lors d'un vol d'essai de l'hélicoptère, on réalise une estimation de la fonction de transfert H (f) entre l'encastrement et le bloc d'amortissement de l'absorbeur. Pour ce faire, on enregistre durant une période de mesure les valeurs successives de la première X et de la seconde Y accélérations fournies respectivement par le premier 17 et le deuxième 18 capteurs selon une fréquence d'échantillonnage.

Les termes Xi, Yi représentent les ièmes composantes des vecteurs X, Y de dimension N (1= i = N).

On rappelle que la pondération dite de Hanning sur un vecteur V définit un nouveau vecteur S :

S et V vecteurs de dimension N à valeurs réelles,

Soit S(i) et V(i) les ièmes composantes des vecteurs S et V :

$$S(i) = \frac{1}{2}\left(1 - \cos((i-1).2\pi / N)\right)V(i)$$

On rappelle aussi que la transformée de fourrier discrète Z d'un vecteur V est définie comme suit :

V vecteur de dimension N à valeurs réelles et Z vecteur de dimension N à valeurs complexes,
Soit Z(i) et V(i) les ièmes composantes des vecteurs Z et V :

$$Z(i) = \sum_{n=1}^{N} V(i) * e^{-2\Pi j(n-1)(i-1)/N}$$

où j représente la racine carrée de - 1.

On adopte les notations suivantes pour procéder au calcul de la fonction de transfert H :

Nf, entier : nombre de points d'une fenêtre consistant en une série de valeurs,
No, entier : nombre de valeurs communes à deux fenêtres consécutives,
Fe : fréquence d'échantillonnage,
H : vecteur de dimension Nf à valeurs complexes,
F : vecteur de dimension Nf à valeurs réelles,
Pxx : vecteur de dimension Nf,
Pxy : vecteur de dimension Nf,
ind : vecteur index variant de 1 à Nf.

Le nombre de fenêtre QF est calculé de la manière suivante :

$$QF = E((N - No)/(Nf - No)),$$

où E symbolise la partie entière On initialise les différentes variables :
$Pxx_0$ à 0,
$Pxy_0$ Nf à 0,

$ind_0$ *à* [1 2 ... *Nf*]

On réalise les opérations suivantes à l'indice i :

$$Xw_i = S(X(ind_{i-1}))$$

$$Yw_i = S(Y(ind_{i-1}))$$

$$Zx_i = Z(Xw_i)$$

$$Zy_i = Z(Yw_i)$$

$$Pxx_i = Pxx_{i-1} + |Zx_i|^2$$

$$Pxy_i = Pxy_{i-1} + Zy_i.*\overline{Zx_i}$$

où $|Zx_i|$ est le vecteur module de $Zx_i$ et $\overline{Zx_i}$ est le vecteur complexe conjugué de $Zx_i$

$$ind_i = ind_{i-1} + (Nf - No)$$

Les itérations sont à répéter jusqu'à l'indice i = QF

On obtient alors :

$H(f) = Pxy(f)/Pxx(f)$ : vecteur fonction de transfert à valeurs complexes et,

$f = [0\ 1\ ...\ Nf\text{-}1]*Fe/Nf$ : vecteur fréquence à valeurs réelles.

La fonction de transfert théorique T(f) prend la forme suivante :

$$T(f) = [(2\pi fo)^2 + 2j\alpha.2\pi fo.2\pi f]/[(j2\pi f)^2 + (2\pi fo)^2 + 2j\alpha.2\pi fo.\ 2\pi f]$$

où les paramètres $\alpha$ et fo représentent respectivement l'amortissement et la fréquence de résonance de l'absorbeur de vibrations.

L'étape suivante consiste à minimiser ce qu'il est convenu d'appeler la fonction coût C, à savoir :

$$C = \sum_f \left\| H(f) - T(f) \right\|^2$$

Cette étape de minimisation donne comme résultat la fréquence de résonance fo.

A titre d'exemple, la procédure de réglage de l'absorbeur de vibrations peut être réalisée comme suit.

En notant :

R, la distance du bloc d'amortissement à l'encastrement,

fr, la fréquence de référence,

D, la valeur de consigne ou le déplacement qu'il convient d'appliquer au bloc d'amortissement, ce déplacement étant compté positivement lorsque l'on s'éloigne de l'encastrement.

En retenant, à titre d'exemple, le calcul de la fréquence propre d'un modèle masse-ressort à un degré de liberté, on obtient D fonction de la fréquence de résonance fo, D = g(fo) :

$$D = [(fo/fr)^{2/3} - 1].R$$

Naturellement, il est possible d'adopter un autre type de modèle.

Le réglage de l'absorbeur pourra avantageusement être automatisé en déplaçant le bloc d'amortissement 10 au moyen d'un quelconque dispositif comportant un actionneur. La mise en oeuvre de cette automatisation ne sera pas plus détaillée car elle est à la portée de l'homme du métier.

L'invention s'applique également lorsque le réglage de l'absorbeur se fait au moyen de rondelles solidaires du bloc dont on augmente ou on diminue le nombre pour ajuster la masse du bloc du résonateur.

En notant :

R, la distance du bloc d'amortissement à l'encastrement,

L, la distance des rondelles à l'encastrement,

M, la masse du bloc d'amortissement (hormis les rondelles),

m, la masse d'une rondelle,

U, le nombre de rondelles figurant sur ce bloc,

v, la masse d'une vis,

W, le nombre de vis supportant des rondelles

fr, la fréquence de référence,

NR, la valeur de consigne ou le nombre de rondelles qu'il convient de modifier, ce nombre étant positif lorsque l'on doit en ajouter.

$$Ip = M.R \qquad\qquad Ir = (m.U + v.W).L^2$$

En retenant à nouveau le calcul de la fréquence propre d'un modèle masse-ressort à un degré de liberté, on obtient :

$$NR = [(fo/fr)^2 - 1).(Ip - Ir)]/(m.L^2)$$

Les exemples de réalisation de l'invention présentés ci-dessus ont été choisis pour leur caractère concret. Il ne serait cependant pas possible de répertorier de manière exhaustive tous les modes de réalisation que recouvre cette invention. En particulier, toute étape ou tout moyen décrit peut-être remplacé par une étape ou un moyen équivalent

**EP 1 531 372 B1**

sans sortir du cadre de la présente invention.

**Revendications**

**1.** Méthode pour accorder un absorbeur de vibrations sur une fréquence de référence fr, cet absorbeur comportant un bloc d'amortissement (10) fixé sur un support (11) dont une extrémité est encastrée dans une structure (HEL), méthode comprenant :

- une étape de mesure pour estimer le décalage entre la fréquence d'accord fo dudit absorbeur et ladite fréquence de référence fr afin de produire une valeur de consigne,
- une étape de réglage pour ajuster au moins une valeur de réglage dudit absorbeur à ladite valeur de consigne,

**caractérisée en ce que** ladite étape de mesure comporte :

- l'établissement d'une fonction de transfert estimée H(f) entre l'encastrement et le bloc d'amortissement de l'absorbeur, sur une bande de fréquences s'étendant de part et d'autres de ladite fréquence de référence fr, à partir d'une première série de mesures de l'accélération X au niveau de l'encastrement (12) dans ladite structure, et à partir d'une deuxième série de mesures de l'accélération Y au niveau dudit bloc d'amortissement (10),
- la définition d'une fonction de transfert théorique T(f) entre l'encastrement et le bloc d'amortissement de l'absorbeur, fonction paramétrée par ladite fréquence d'accord fo,
- le calcul de la fréquence d'accord fo pour laquelle l'écart C(f) entre lesdites fonctions de transfert estimée H(f) et théorique T(f) est minimisé, et
- la définition de ladite valeur de consigne au moyen de ladite fréquence d'accord fo et de la fréquence de référence fr.

**2.** Méthode selon la revendication 1, **caractérisée en ce que** la définition de ladite valeur de consigne au moyen de ladite fréquence d'accord fo est effectuée au moyen d'un modèle à un degré de liberté.

**3.** Méthode selon l'une quelconque des revendications 1 ou 2 dans laquelle ladite structure (HEL) est la structure d'un hélicoptère.

**4.** Méthode selon l'une quelconque des revendications 1 à 3 dans laquelle, pour calculer la fonction de transfert estimée à partir des mesures d'accélération X, Y, on utilise une pondération de Hanning.

**5.** Méthode selon l'une quelconque des revendications 1 à 4 dans laquelle, pour régler l'absorbeur résonant, on déplace le bloc le long de la lame jusqu'à une position requise correspondant à la valeur de consigne et on verrouille le bloc dans cette position.

**6.** Méthode selon l'une quelconque des revendications 1 à 5 dans laquelle, pour régler l'absorbeur, on modifie la masse du bloc.

**7.** Méthode selon la revendication 6 dans laquelle, pour modifier la masse du bloc, on augmente ou on diminue le nombre de rondelles solidaires du bloc.

**Claims**

**1.** A method of tuning a vibration absorber to a reference frequency fr, this absorber having a damper block (10) fixed to a support (11) whereof one end is embedded in a structure (HEL), the method comprising:

- a measuring step for estimating the offset between the tuned frequency fo of the said absorber and the said reference frequency fr in order to produce a setpoint value,
- an adjusting step for adjusting at least one adjustment value of the said absorber to the said setpoint value,

**characterised in that** the said measuring step includes:

- establishing an estimated transfer function H(f), between the embedment and the damper block of the absorber, over a frequency band extending on either side of the said reference frequency fr from a first series of measurements of the acceleration X at the embedment (12) in the said structure and from a second series of measurements of the acceleration Y at the said damper block (10),
- defining a theoretical transfer function T(f) between the embedment and the damper block of the absorber, this function being parameterised by the said tuned frequency fo,
- calculating the tuned frequency fo for which the difference C(f) between the said estimated transfer function H(f) and the theoretical transfer function T(f) is minimised, and
- defining the said setpoint value by means of the said tuned frequency fo and the reference frequency fr.

**2.** A method according to Claim 1, **characterised in that** defining the said setpoint value by means of the said tuned frequency fo is performed by means of a model having one degree of freedom.

**3.** A method according to either of Claims 1 and 2, in which the said structure (HEL) is the structure of a helicopter.

**4.** A method according to any one of Claims 1 to 3, in which, in order to calculate the estimated transfer function from measurements of the acceleration X, Y, use is made of Hanning weighting.

**5.** A method according to any one of Claims 1 to 4, in which, in order to adjust the resonating absorber, the block is moved along the blade to a required position corresponding to the setpoint value, and the block is locked in this position.

**6.** A method according to any one of Claims 1 to 5, in which, in order to adjust the absorber, the mass of the block is modified.

**7.** A method according to Claim 6, in which, in order to modify the mass of the block, the number of washers secured to the block is increased or decreased.

**Patentansprüche**

**1.** Verfahren zum Abstimmen eines Schwingungsabsorbers auf eine Bezugsfrequenz fr, wobei dieser Absorber einen Dämpfungsblock (10) aufweist, der auf einem Träger (11) befestigt ist, von dem ein Ende in eine Struktur (HEL) eingebunden ist, wobei das Verfahren aufweist:

- einen Messschritt, um die Verschiebung zwischen der Abstimmfrequenz fo des Absorbers und der Bezugsfrequenz fr zu schätzen, um einen Sollwert zu erzeugen,
- einen Einstellschritt, um mindestens einen Einstellwert des Absorbers an den Sollwert anzupassen,

**dadurch gekennzeichnet, dass** der Messschritt aufweist:

- das Erstellen einer geschätzten Transferfunktion H(f) zwischen der Einbindung und dem Dämpfungsblock des Absorbers in einem Frequenzband, das sich zu beiden Seiten der Bezugsfrequenz fr erstreckt, ausgehend von einer ersten Reihe von Messungen der Beschleunigung X in Höhe der Einbindung (12) in die Struktur, und ausgehend von einer zweiten Reihe von Messungen der Beschleunigung Y in Höhe des Dämpfungsblocks (10),
- die Definition einer theoretischen Transferfunktion T(f) zwischen der Einbindung und dem Dämpfungsblock des Absorbers, eine von der Abstimmfrequenz fo parametrierte Funktion,
- die Berechnung der Abstimmfrequenz fo, bei der die Abweichung C(f) zwischen der geschätzten H(f) und theoretischen Transferfunktion T(f) minimiert ist, und
- die Definition des Sollwerts mittels der Abstimmfrequenz fo und der Bezugsfrequenz fr.

**2.** Verfahren nach Anspruch 1, **dadurch gekennzeichnet, dass** die Definition des Sollwerts mittels der Abstimmfrequenz fo mittels eines Modells mit einem Freiheitsgrad durchgeführt wird.

**3.** Verfahren nach einem der Ansprüche 1 oder 2, bei dem die Struktur (HEL) die Struktur eines Hubschraubers ist.

**4.** Verfahren nach einem der Ansprüche 1 bis 3, bei dem zur Berechnung der geschätzten Transferfunktion ausgehend von den Beschleunigungsmessungen X, Y eine Hanning-Gewichtung verwendet wird.

**5.** Verfahren nach einem der Ansprüche 1 bis 4, bei dem zur Einstellung des resonanten Absorbers der Block entlang der Platte bis in eine erforderliche Position verschoben wird, die dem Sollwert entspricht, und der Block in dieser Position verriegelt wird.

**6.** Verfahren nach einem der Ansprüche 1 bis 5, bei dem zur Einstellung des Absorbers die Masse des Blocks verändert wird.

**7.** Verfahren nach Anspruch 6, bei dem zur Veränderung der Masse des Blocks die Anzahl von fest mit dem Block verbundenen Scheiben erhöht oder verringert wird.

Fig.1

HEL

$$C = \sum_f \| H(f) - T(f) \|^2$$

$$f_0$$

$$D = g(f_0)$$

Fig.2